# EUROPÄISCHE PATENTSCHRIFT

(11) **EP 1 168 302 B1**
(45) Veröffentlichungstag und Bekanntmachung des Hinweises auf die Patenterteilung: **11.08.2010**
(21) Anmeldenummer: 01111229.9
(22) Anmeldetag: 15.05.2001
(51) Int. Cl.: G10L 15/22

(54) **Spracherkennungssytem mit einem aktiven Bereitschaftszustand**
Speech recognition system with active standby mode
Système de reconnaissance de parole avec mode de veille active

(30) Priorität: 21.06.2000 DE 10030369
(43) Veröffentlichungstag der Anmeldung: 02.01.2002
(73) Patentinhaber: Volkswagen Aktiengesellschaft, 38436 Wolfsburg (DE)
(72) Erfinder: Oberschachtsiek, André, Sunnyvale, CA 94089-1004 (US); Crull, Torsten, 38106 Braunschweig (DE)
(74) Vertreter: Zucker, Volker

(56) Entgegenhaltungen:
- EP-A- 0 847 003
- EP-A- 1 091 346
- WO-A-00/26901

## Beschreibung

Die Erfindung betrifft ein Spracherkennungssystem und ein Verfahren zur Erfassung von Sprachbefehlen in einem Spracherkennungssystem.

Spracherkennungssysteme finden zunehmend Anwendung in den verschiedensten Technikgebieten. Die Spracherkennungssysteme dienen dazu, die von einem Nutzer gesprochenen oder buchstabierten Befehle zu erfassen, zu erkennen und die gewünschte Interaktion durchzuführen. Ein bevorzugtes Anwendungsgebiet von Spracherkennungssystemen ist die Steuerung von verschiedenen elektrischen Komponenten in einem Kraftfahrzeug, da dort der Nutzer meist die Hände am Lenkrad belassen muss. Ein großes Problem der Spracherkennungssysteme ist deren noch zu große Fehlerhäufigkeit. Einige der Fehlerursachen sind beispielsweise zu starke Störgeräusche, das Selektieren von Sprachbefehlen aus einem kontinuierlich gesprochenen Satz oder die Varianz von Sprachbefehlen. Zu den angesprochenen Fehlerursachen gibt es jeweils Lösungsansätze, um die Anzahl der Fehler zu reduzieren, was für die Akzeptanz von Spracherkennungssystemen sehr wichtig ist.

Die Patentschrift EP-A-0847003 offenbart ein Spracherkennungssystem mit einem Eingabeelement mittels dessen das Spracherkennungssystem aktiviert wird.

Die Patentschrift EP-A-1091346 ist ein Stand der Technik gemäss Artikel 54(3) EPÜ, der ein Spracherkennungssystem zur Steuerung von Applikationen auf einem PC beschreibt.

Der Erfindung liegt daher das technische Problem zugrunde, ein Spracherkennungssystem und ein Verfahren zur Erfassung von Sprachbefehlen in einem solchen Spracherkennungssystem zu schaffen, bei dem die Erkennung verbessert wird.

Die Lösung des technischen Problems ergibt sich durch die Gegenstände mit den Merkmalen der Patentansprüche 1 und 3. Weitere vorteilhafte Ausgestaltungen der Erfindung ergeben sich aus den Unteransprüchen.

Hierzu ist dem Spracherkennungssystem ein Speicher zugeordnet, in dem kontinuierlich im deaktivierten Zustand des Spracherkennungssystems erfaßte Sprache abgespeichert wird. Bei der Betätigung des Eingabeelementes zur Aktivierung des Spracherkennungssystems werden dann in einem Zeitfenster vor der Betätigung des Eingabeelemtes zwischengespeicherte Worte bei der Sprachbefehlsinterpretation mitberücksichtigt.

Die Erfindung geht dabei von der Erkenntnis aus, dass der Nutzer von Spracherkennungssystemen häufig das Aktivierungselement betätigt und gleichzeitig bereits mit dem Sprachbefehl beginnt. Dadurch kommt es häufig dazu, dass das Spracherkennungssystem nicht den Anfang des Sprachbefehls sicher erfasst, wodurch entsprechende Rückfragen notwendig sind, die die Akzeptanz derartiger Spracherkennungssysteme reduzieren. Dies wird erfindungsgemäß durch die Berücksichtigung kurz vor der Aktivierung erfaßter Wörter berücksichtigt.

Die Erfindung wird nachfolgend anhand eines bevorzugten Ausführungsbeispieles näher erläutert. Die einzige Figur zeigt ein schematisches Blockschaltbild eines Spracherkennungssystems.

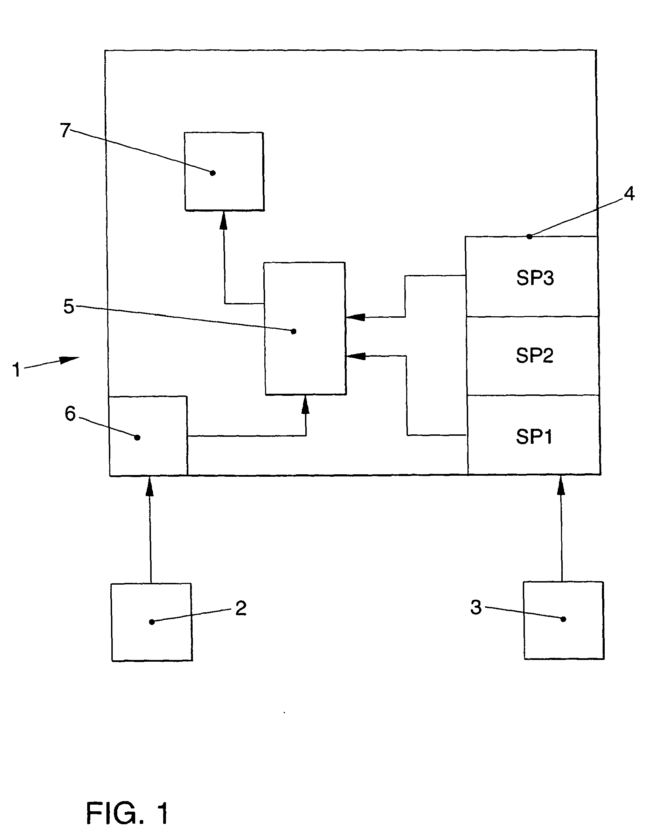

Das Spracherkennungssystem 1 umfaßt ein Eingabeelement 2, ein Mikrofon 3, einen Speicher 4, einen Multiplexer 5 und eine Steuereinheit 6. Das Eingabeelement 2 ist beispielsweise als Taster oder Hebel ausgebildet und mit der Steuereinheit 6 verbunden. Das Mikrofon 3 ist mit Speicher 4 verbunden, der als Schieberegister ausgebildet ist. In der Fig. 1 ist das Schieberegister symbolisch mit drei Speicherplätzen SP 1-3 dargestellt. Die Datenausgänge der Speicherplätze SP1 und SP3 sind mit den Dateneingängen des Multiplexers 5 verbunden, dessen Datenausgang zu einer Spracherkennungseinheit 7 führt, wo die eigentliche Spracherkennung gemäß dem Stand der Technik stattfindet. Der Steuereingang und Aktivierungseingang des Multiplexers 5 sind mit der Steuereinheit 6 verbunden.

Ist das Spracherkennungssystem 1 deaktiviert, so deaktiviert bzw. disabled die Steuereinheit 6 den Multiplexer 5, wohingegen das Mikrofon 3 und der Speicher 4 aktiv bleiben. Kontinuierlich überträgt das Mikrofon 3 erfasste Sprache an den Speicher 4, wo diese entsprechend der Länge des Schieberegisters zwischengespeichert und schließlich aus dem Speicher 4 herausgeschoben wird.

Möchte nun der Nutzer das Spracherkennungssystem 1 nutzen, so betätigt dieser das Eingabeelement 2, was von der Steuereinheit 6 erfaßt wird. Die Steuereinheit 6 aktiviert bzw. enabled den Multiplexer 5 und schaltet den Datenausgang von SP 3 durch. Dadurch wird sichergestellt, daß wenige Millisekunden vor der Betätigung des Eingabeelementes 2 gesprochene Worte bei der Spracherkennung berücksichtigt werden. Möchte der Nutzer beispielsweise seine "Tante Klara" anrufen, so gibt er beispielsweise ein:
"Rufe an Tante Klara".

Hat nun der Nutzer mit dem Sprechen bereits etwas eher begonnen, bevor das Eingabeelement 2 betätigt wurde, so würde das Spracherkennungssystem nach dem Stand der Technik nur "Tante Klara" erfassen, ohne zu wissen, was nun mit "Tante Klara" geschehen soll, beispielsweise ob "Tante Klara" eine Zieleingabe für ein Navigationssystem oder ein Anrufziel sein soll. Im vorliegenden Fall sind nun die Worte "Rufe an" auf den Speicherplätzen SP2 und/oder SP3 abgelegt und können von der Spracherkennungseinheit 7 berücksichtigt werden. Um nun die zeitliche Verzögerung bei der Spracherkennung zu reduzieren, wird anschließend von der Steuereinheit 6 auf den Datenausgang von SP1 umgeschaltet, so daß im laufenden Betrieb die gesprochenen Worte direkt an die Spracherkennungseinheit 7 weitergegeben werden.

Es versteht sich, daß einige der hier beschriebenen Hardware- Komponenten auch softwaretechnisch umsetzbar sind.

## Patentansprüche

1. Spracherkennungssystem zur Steuerung verschiedener elektrischer Komponenten in einem Kraftfahrzeug, umfassend mindestens ein Eingabeelement, mittels dessen das Spracherkennungssystem aktivierbar ist, **dadurch gekennzeichnet, dass** dem Spracherkennungssystem (1) ein Speicherelement (4) zugeordnet ist, in dem kontinuierlich im deaktivierten Zustand des Spracherkennungssystems (1) erfaßte Sprache abspeicherbar ist und bei Betätigung des Eingabeelementes (2) zeitlich vor der Betätigung abgespeicherte Worte bei der Sprachbefehlserkennung berücksichtigbar sind.

2. Spracherkennungssystem nach Anspruch 1, **dadurch gekennzeichnet, dass** das Speicherelement (4) als Schieberegister oder Ringspeicher ausgebildet ist.

3. Verfahren zur Erfassung von Sprachbefehlen bei einem Spracherkennungssystem (1) zur Steuerung verschiedener elektrischer Komponenten in einem Kraftfahrzeug, mittels eines Eingabeelementes (2) zur Aktivierung des Spracherkennungssystems und eines Speicherelementes (4), umfassend folgende Verfahrensschritte:
a) Kontinuierliches Erfassen und Zwischenspeichern von Worten, während das Spracherkennungssystem (1) deaktiviert ist,
b) Betätigen des Eingabeelementes (2) zur Aktivierung des Spracherkennungssystems (1) und
c) Berücksichtigen von gemäß Verfahrensschritt a) zwischengespeicherten Worten bei der Erfassung von Sprachbefehlen, die innerhalb eines Zeitfensters vor der Betätigung des Eingabeelementes (2) zwischengespeichert wurden.

## Claims

1. Voice recognition system for the control of different electrical components in a motor vehicle, comprising at least one input element which can be used to activate the voice recognition system, **characterized in that** the voice recognition system (1) has an associated memory element (4) which can be used to store speech recorded continuously in the deactivated state of the voice recognition system (1), and operation of the input element (2) allows words stored before the time of said operation to be taken into account in the voice command recognition.

2. Voice recognition system according to Claim 1, **characterized in that** the memory element (4) is in the form of a shift register or ring memory.

3. Method for the capture of voice commands in a voice recognition system (1) for the control of different electrical components in a motor vehicle, using an input element (2) for activating the voice recognition system and a memory element (4), comprising the following method steps:
a) words are continually captured and buffer-stored while the voice recognition system (1) is deactivated,
b) the input element (2) is operated in order to activate the voice recognition system (1), and
c) words buffer-stored in accordance with method step a) are taken into account in the capture of voice commands which have been buffer-stored within a time window before the operation of the input element (2).

## Revendications

1. Système de reconnaissance vocale pour commander différents composants électriques dans un véhicule automobile, comprenant au moins un élément de saisie au moyen duquel peut être activé le système de reconnaissance vocale, **caractérisé en ce qu'**un élément de mémoire (4) est associé au système de reconnaissance vocale (1), dans lequel peut être mémorisée la parole acquise continuellement lorsque le système de reconnaissance vocale (1) est à l'état désactivé et, lors de l'actionnement de l'élément de saisie (2), les mots qui ont été mémorisés avant l'actionnement peuvent être pris en compte lors de la reconnaissance des instructions vocales.

2. Système de reconnaissance vocale selon la revendication 1, **caractérisé en ce que** l'élément de mémoire (4) est réalisé sous la forme d'un registre à décalage ou d'une mémoire en anneau.

3. Procédé d'acquisition d'instructions vocales avec un système de reconnaissance vocale (1) pour commander différents composants électriques dans un véhicule automobile, au moyen d'un élément de saisie (2) pour activer le système de reconnaissance vocale et un élément de mémoire (4), comprenant les étapes suivantes :
a) acquisition continue et mémorisation temporaire de mots pendant que le système de reconnaissance vocale (1) est désactivé,
b) actionnement de l'élément de saisie (2) pour activer le système de reconnaissance vocale (1) et
c) prise en compte, lors de l'acquisition d'instructions vocales, des mots mémorisés temporairement selon l'étape a) qui ont été mémorisés temporairement pendant un créneau temporel avant l'actionnement de l'élément de saisie (2).
